# EUROPEAN PATENT APPLICATION

(11) **EP 0 689 895 A1**
(43) Date of publication of application: **03.01.1996**
(21) Application number: 95304565.5
(22) Date of filing: 28.06.1995
(51) Int. Cl.: B23K 7/10

(54) **A handle for welding apparatus**

(30) Priority: 01.07.1994 GB 9413963
(71) Applicant: Parweld Limited, Bewdley, Worcestershire DY12 2UJ (GB)
(72) Inventor: Parker, Tracy Stephen, Parweld Limited, Bewdley, Worcestershire, DY12 2UJ (GB)
(74) Representative: Jones, Graham H.

(57) **Abstract**

A handle (2) for welding apparatus, which handle (2) comprises a first body part (4), a second body part (6), clip fastener means (8) which is positioned at a front part (10) of the handle (2) and which clips the first body part (4) to the second body part (6), a first aperture (12) at the front part (10) of the handle (2) for receiving a burner tube (14), and a second aperture for receiving a trigger (18).

## Description

This invention relates to a handle for welding apparatus.

There are many different designs of handles for welding apparatus. The handles are usually of a complicated construction which makes them difficult and/or time consuming to manufacture and assemble.

It is an aim of the present invention to reduce the above mentioned problem.

Accordingly, in one non-limiting embodiment of the present invention there is provided a handle for welding apparatus, which handle comprises a first body part, a second body part, clip fastener means which is positioned at a front part of the handle and which clips the first body part to the second body part, a first aperture at the front part of the handle for receiving a burner tube, and a second aperture for receiving a trigger.

The clip fastener means enables the first and the second body parts simply and easily to be clipped together. Thus, for example, there is no need to use screws which are time consuming to fasten, in addition to adding to the expense of the handle.

Preferably, the clip fastener means is a pair of bosses which fit in a pair of grooves.

Preferably, the grooves each extend at a right angle such that they each have an entrance portion for their boss and a locating portion for their boss.

Advantageously, the locating portion of each groove has an end wall which has first and second wall portions which extend at different angles which thereby define an angular pivot about which the boss in the groove pivots during clipping together of the first and the second body parts.

Usually, the handle will be one in which the pair of bosses are on the first body part, and in which the pair of grooves are in the second body part. The reverse arrangement may however be employed if desired.

The first body part advantageously clips over the second body part in order to provide a neat appearance to the handle, whilst at the same time giving very good location of the first and the second body parts together.

The handle may include a tubular portion at a rear part of the handle, the tubular portion being formed from a rear end portion of the first body part and a rear end portion of the second body part, and the tubular portion being such that it supports securing means for securing together the rear end portions of the first and the second body parts. The securing means is preferably a nut but other types of securing means may be employed if desired.

The handle may include the burner tube. If desired, the handle may be manufactured and sold without the burner tube. The burner tube is preferably a swan neck shaped burner tube. Other shapes may however be employed for the burner tube.

The end of the burner tube in the handle may be attached to a water cooled block. The water cooled block is preferably brazed to the burner tube.

The handle will usually include the trigger. The trigger may advantageously form part of a trigger and carrier assembly.

The first and the second body parts will usually be moulded first and second body parts but they may be formed by other methods if desired. The first and the second body parts may be formed of any suitable and appropriate materials including plastics materials.

The present invention also extends to welding apparatus when provided with the handle. The welding apparatus may be non-electric welding apparatus or electric welding apparatus. The handle may be of a variety of shapes and sizes in order to fit different types of welding apparatus.

An embodiment of the invention will now be described solely by way of example and with reference to the accompanying drawings in which:
Figure 1 is a longitudinal section through a handle for welding apparatus;
Figures 2, 3 and 4 illustrate how a first body part is clipped to a second body part;
Figures 5, 6 and 7 illustrate the action of clip fastener means used to clip the first body part to the second body part; and
Figures 8, 9 and 10 illustrate how the first body part fits over the second body part.

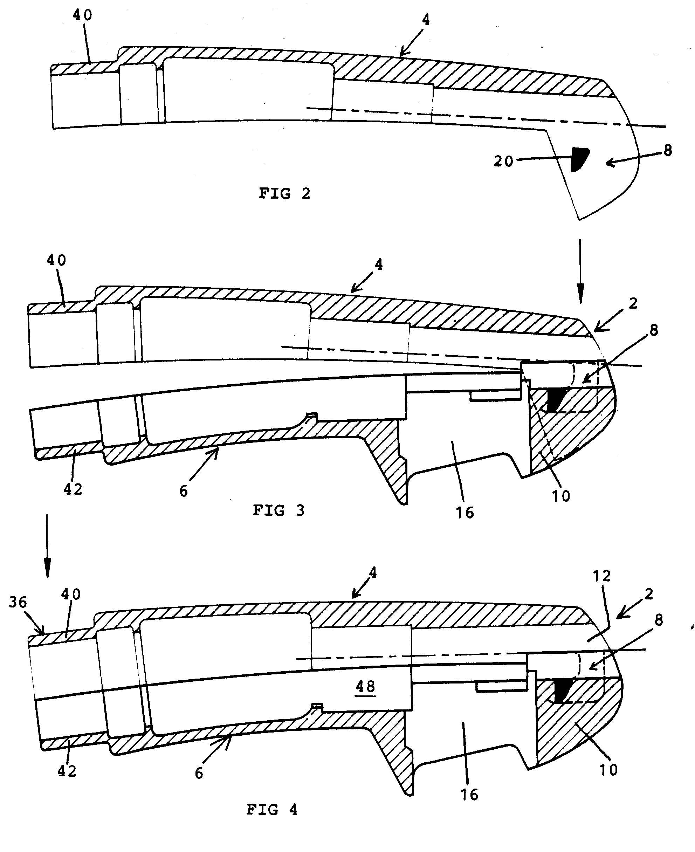

Referring to the drawings, there is shown a handle 2 for welding apparatus. The handle 2 comprises a first body part 4 and a second body part 6. The handle 2 further comprises clip fastener means 8 which is positioned at a front part 10 of the handle 2 and which clips the first body part 4 to the second body part 6, as can be seen from Figures 2 - 7.

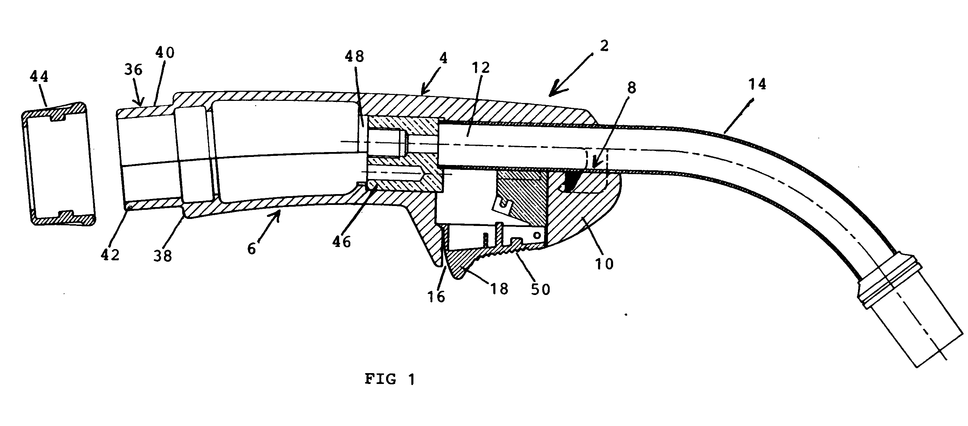

The handle 2 further comprises a first aperture 12 which is at the front part 10 of the handle 2 and which receives a burner tube 14 as shown in Figure 1. The handle 2 still further comprises a second aperture 16 for receiving a trigger 18.

The clip fastener means 8 comprises a pair of bosses 20 which fit in a pair of grooves 22.

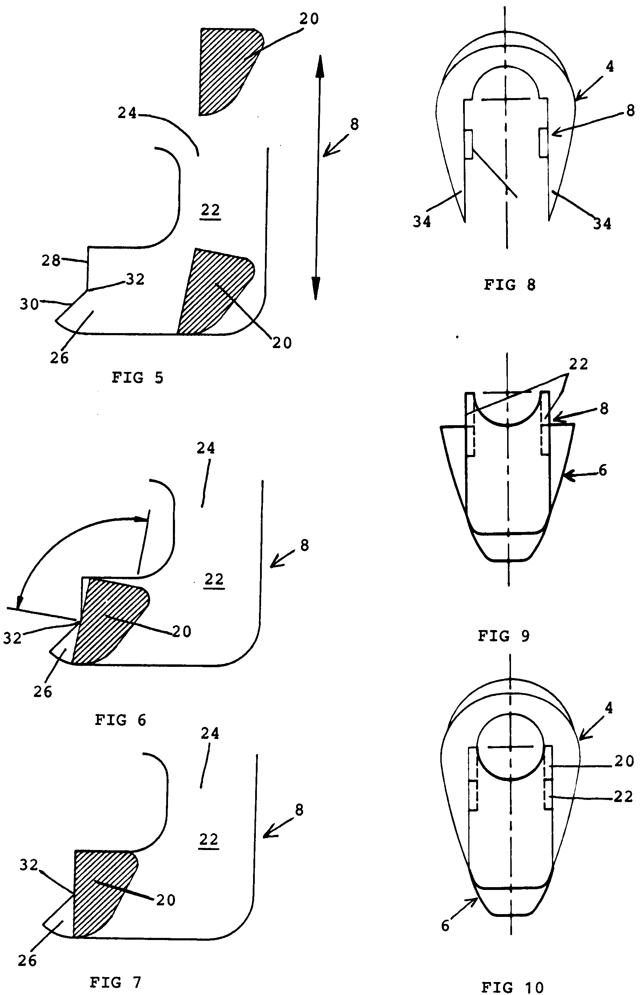

As can be seen from Figures 5, 6 and 7 each groove 22 extends through a right angle such that it has an entrance portion 24 for the boss 20, and a locating portion 26 for the boss 20. The locating portion 26 has an end wall which has a first wall portion 28 and a second wall portion 30. The first and second wall portions 28, 30 extend at different angles as can be seen from Figures 5, 6 and 7 and they define an angular pivot 32 about which the boss 20 pivots during clipping together of the first and the second body parts 4, 6. Figure 5 shows the boss 20 moving towards the angular pivot 32, Figure 6 shows the boss 20 pivoting about the angular pivot 32, and Figure 7 shows the boss 20 in its final fastening position.

The bosses 20 are on the first body part 4 as can be seen from Figure 8, whilst the grooves 22 are on the second body part 6 as shown in Figure 9. Figure 10 shows the first and the second body parts clipped together. As can be appreciated from Figures 8, 9 and 10, the first body part 4 has a pair of side portions 34 which fit over the second body part 6.

As can be seen from Figure 1, the handle 2 has a tubular portion 36 at a rear part 38 of the handle 2. The tubular portion 36 is formed of a rear end portion 40 of the first body part 4, and a rear end portion 42 of the second body part 6. The tubular portion 36 is such that it supports and receives securing means in the form of a nut 44. The nut 44 secures together the rear end portions 40, 42 of the first and the second body parts 4, 6 and thus acts with the clip fastener means 8 securely to retain the first and the second body parts 4, 6 together.

As can be seen from Figure 1, the burner tube 14 is a swan neck shaped burner tube 14. The burner tube 14 is attached by brazing to a water cooled block 46 which fits in a chamber 48 of the handle 2 as shown.

The trigger 18 forms part of a trigger and carrier assembly 50 which can be separately manufactured and then inserted into the second aperture 16.

The handle 2 shown in the drawings is easily manufactured and easily secured together. Thus manufacturing and assembly costs are reduced to a minimum, whilst at the same time providing a handle 2 which is of a pleasing aesthetic shape.

It is to be appreciated that the embodiment of the invention described above with reference to the accompanying drawings has been given by way of example only and that modifications may be effected. Thus, for example, the shape and the size of the handle 2 may be varied as desired to suit different types of welding apparatus to which the handle 2 is to be attached.

## Claims

1. A handle for welding apparatus, which handle comprises a first body part, a second body part, clip fastener means which is positioned at a front part of the handle and which clips the first body part to the second body part, a first aperture at the front part of the handle for receiving a burner tube, and a second aperture for receiving a trigger.

2. A handle according to claim 1 in which the clip fastener means is a pair of bosses which fit in a pair of grooves.

3. A handle according to claim 2 in which the grooves each extend through a right angle such that they each have an entrance portion for their boss and a locating portion for their boss.

4. A handle according to claim 3 in which the locating portion of each groove has an end wall which has first and second wall portions which extend at different angles and which thereby define an angular pivot about which the boss in the groove pivots during clipping together of the first and the second body parts.

5. A handle according to any one of claims 2 - 4 in which the pair of bosses are on the first body part, and in which the pair of grooves are in the second body part.

6. A handle according to any one of the preceding claims in which the first body part clips over the second body part.

7. A handle according to any one of the preceding claims and including a tubular portion at a rear part of the handle, the tubular portion being formed from a rear end portion of the first body part and a rear end portion of the second body part, and the tubular portion being such that it supports securing means for securing together the rear end portions of the first and the second body parts.

8. A handle according to any one of the preceding claims and including a burner tube.

9. A handle according to any one of the preceding claims and including the trigger.

10. Welding apparatus when provided with a handle according to any one of the preceding claims.
